# EUROPEAN PATENT APPLICATION

(11) **EP 1 215 797 A2**
(43) Date of publication of application: **19.06.2002**
(21) Application number: 01310359.3
(22) Date of filing: 11.12.2001
(51) Int. Cl.: H02J 7/00

(54) **Shunt automatically controlled output circuit incorporating stored voltage or counter electromotive force loading**

(30) Priority: 12.12.2000 DE 20021056 U
(71) Applicant: Yang, Tai-Her, Si-Hu Town, Dzan-Hwa (TW)
(72) Inventor: Yang, Tai-Her, Si-Hu Town, Dzan-Hwa (TW)
(74) Representative: Pratt, David Martin

(57) **Abstract**

A shunt automatically controlled output circuit incorporating stored voltage or counter EMF loading, featuring serial incorporation of an isolation diode (CR100) way between a D.C power supply and a battery (B100) in which a voltage is stored, or a D.C motor (M100) bearing an armatured counter EMF, such that, once a loading which functions to store voltage as well such as a load in the form of a secondary cell (B100) or a capacitor or a super-capacitance capacitor (C100) or a D.C motor (M100) bearing a counter EMF by reason of its terminal voltage exceeds a predetermined threshold, the resistor (R101) that is shunted in parallel across the power supply will be made conductive by the load voltage testing circuit (VD100), whereby voltage on the power supply side is reduced, and that bringing about a cut in the voltage differential with respect to the loading terminal, so that power that is being delivered to the load is reduced in the long run.

## Description

This invention relates to a shunt automatically controlled output circuit incorporating stored voltage or counter EMF (electromotive force) loading, featuring serial incorporation of an isolation diode way between a D.C. power source and a battery in which a voltage is stored, or a D.C. motor bearing an armatured counter EMF; such that, once a loading which functions to store voltage as well as a load in the form of a secondary cell or a capacitor or a super-capacitance capacitor, or a D.C. motor bearing a counter EMF by reason of its terminal voltage exceeds a predetermined threshold, the resistor that is shunted in parallel across the power supply will be made conductive by the load voltage testing circuit, whereby voltage on the power supply side is reduced, and that bringing about a cut in the voltage differential with respect to the loading terminal, so that power that is being delivered to the load is reduced in the long run.

Traditionally, the output circuit, of automatic control mode, serving to drive a secondary cell or a capacitor, or a super capacitance which serves to store a voltage, including those which incorporate an armatured counter EMF sustained D.C. motor, has its loading voltage or current controlled by master control in series with the load. Such a conventional design, due to circuitry complication, used to incur elevated costs.

The essence of the invention lies in the serial incorporation of an isolation diode between a D.C. power supply and a battery that is charged with a stored voltage or another D.C. power supply charged under a counter EMF; such that, once a loading which functions to store voltage as well as a load in the form of a secondary cell or capacitor or super capacitance capacitor or a D.C. motor bearing a counter EMF by reason of its terminal voltage exceeds a predetermined threshold, the resistor that is shunted in parallel across the power supply will be made conductive by the load voltage testing circuit, whereby voltage on the power supply side is reduced, and that bringing about a cut in the voltage differential with respect to the loading terminal, so that power that is being delivered to the load is reduced in the long run.

The invention will now be described in greater detail, by way of example, with reference to the drawings, in which:-
Figure 1 is a block diagram of the circuitry according to the invention;
Figure 2 is an illustration of the voltage testing circuit according to the invention; and
Figure 3 is another illustration of the voltage testing circuit according to the invention.

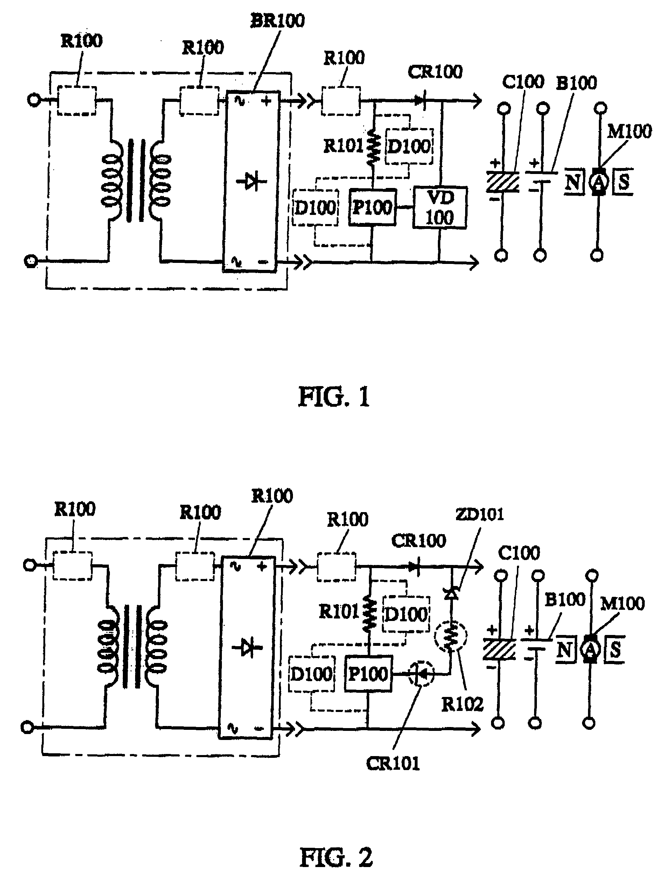

Referring to the drawings, Figure 1 is a block diagram of the circuitry, which comprises:
a D.C. power supply: which is either in the form of D.C. output from rectification of line voltage through a full-wave rectifier BR100, or through a half-wave rectifier;
a resistor R100: in the form of a regular positive temperature coefficient (PTC) resistor, or a negative temperature coefficient (NTC) resistor, in series with the output of the power supply, to be provided optionally;
a shunt resistor R101: which is in substance a power control P100 comprising a regular PTC resistor or an NTC resistor in combination with a mechanical switch or a solid state switching element or still with a solid state linear element, in serial connection for paralleling across the output of the power supply, or alternatively for series connection with a D.C. resistor R100, thence still in series with an isolation diode CR100 for passage to the load;
an isolation diode CR100: in series connection between the output of the aforementioned power supply and the output of the load;
a load voltage testing circuit VD100: composed of a mechanical switch or a solid state switching element, in parallel across both ends of the load, to drive the power control element P100 to function as a switch, or to reduce impedance in a gradual, linear manner, once the voltage on the load terminal rises beyond a predetermined threshold, so that the shunt resistor R101, driven conductive, starts to by-pass current, and that in turn serving to narrow down the differential of voltage between the output of the power supply and the load terminal, so that power going to the load is reduced accordingly;
a power control element P100: in the form of either a mechanical relay or a thyrister or an IGBT, or a MOSFET or a common linear transistor;
an output status display D100: in the form of an electric power to acoustic power converter, or an electric power to optic power converter which is either of electro-mechanical structure or of solid state, and permissible for paralleling across both ends of the shunt resistor, whereby a change in terminal voltage serves to drive the output status display D100 into corresponding acoustic or optic display, or else the same may be paralleled across both ends of the power control element P100 in control of the shunt resistor, whereby voltage fluctuations across the power control element P100 serve to drive the output status display D100 into corresponding acoustic or optic manifestations to be realised by both or one of both load status display or dispensed with optionally;
a load: load fit for application in this circuit is a secondary battery B100, a capacitor or a super-capacitance capacitor C100 capable of storing voltage, or one in the form of a D.C. motor M100 charged with armatured counter EMF.

By the control means of the aforementioned load voltage testing circuit VD100 upon the power control element P100, once voltage on the load side rises to a level sufficient to subject the power control element P100 under control, the shunt resistor R101 will yield to passage of shunt current, so that the voltage differential between the power supply side and the load side, to the effect that power that is being delivered to the load is reduced in the long run.

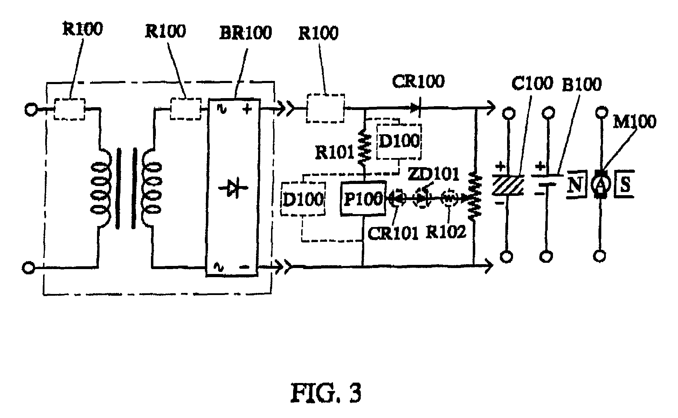

Figure 2 illustrates the voltage testing circuit according to the invention, which circuit comprises:
(1) at least one Zener diode ZD101; or alternatively;
(2) a forward bias voltage (VF) to be created by at least one diode CR101; or
(3) a series combination of a Zener diode and a diode; or
(4) a serially-incorporated current-limiting resistor R102 in addition to what is defined under (1), (2) or (3);
(5) the arrangement to have a variable resistor VR100 in parallel across the load, plus circuit elements defined in (1) through (4) added to the output of a variable potential terminal that forms part of said variable resistor, as exemplified in another illustration of the voltage testing circuit according to the invention in Figure 3.

Where, and as dictated by specific applications, the aforementioned voltage testing circuit is employed to drive power control elements straight or in a roundabout way by the intervention of a photocoupler, etc.

Also, where the D.C. power supply in the circuit is derived by transformation, followed by rectification of the transformer, the aforementioned resistor R100 may be incorporated serially as required on the primary input side or on the secondary input side of the transformer, or alternatively have its voltage downgraded by transformer impedance, or by electromagnetic leakage, in which case the resistor R100 is saved altogether.

In summation, the shunt automatically controlled output circuit incorporating stored voltage or counter electromotive force loading of the invention, by virtue of its concise and simple circuitry, provides adequacy of required performance and novelty in circuit layout.

## Claims

1. A shunt automatically controlled output circuit incorporating stored voltage or counter electromotive force loading, **characterised by** the series incorporation of an isolation diode way between a D.C power supply and a battery in which a voltage is stored, or a D.C motor bearing an armatured counter EMF; such that, once a loading which functions to store voltage as well as load in the form of a secondary cell or a capacitor or a super capacitance capacitor or a D.C motor bearing a counter EMF by reason of its terminal voltage exceeds a predetermined threshold, the resistor that is shunted in parallel across the power supply will be made conductive by the load voltage testing circuit, whereby voltage on the power supply side is reduced, and that bringing about a cut in the voltage differential with respect to the loading terminal, so that power that is being delivered to the load is reduced in the long run.

2. A circuit according to claim 1, further comprising:
a D.C power supply which is either in the form of D.C output from rectification of a line voltage through a full-wave rectifier (BR100) or through half-wave rectifier rectification;
a resistor (R100) in the form of a regular positive temperature coefficient (PTC) resistor or a negative temperature coefficient (NTC) resistor, in series with the output of the power supply, to be provided optionally;
a shunt resistor R101 which is in substance a power control (P100) comprising a regular PTC resistor or an NTC resistor in combination with a mechanical switch or a solid state switching element or still with a solid state linear element, in serial connection for paralleling across the output of the power supply, or alternatively for series connection with a D.C resistor (R100), thence still in series with an isolation diode (CR100) for passage to the load;
an isolation diode (CR100) in series connection between the output of aforementioned power supply and the output of the load;
a load voltage testing circuit (VD100) composed of a mechanical switch or a solid state switching element, in parallel across both ends of the load, to drive the power control element (P100) to function as a switch or to reduce impedance in a gradual, linear manner, once the voltage on the load terminal rises beyond a predetermined threshold, so that the shunt resistor (R101), driven conductive, starts to by-pass current, and that in turn serving to narrow down the differential of voltage between the output of the power supply and the load terminal, so that power going to the load is reduced accordingly;
a power control element (P100) in the form of either a mechanical relay or a thyrister or an IGBT, or a MOSFET or a common linear transistor;
an output status display (D100) in the form of an electric power to acoustic power converter or an electric power to optic power converter, which is either of electro-mechanical structure or of solid state, and permissible for paralleling across both ends of the shunt resistor, whereby a change in terminal voltage serves to drive the output status display (D100) into corresponding acoustic or optic display, or else the same may be paralleled across both ends of the power control element (P100) in control of the shunt resistor, whereby voltage fluctuations across the power control element (P100) serves to drive the output status display (D100) into corresponding acoustic or optic manifestations to be realised by both or one of both load status display or dispensed with optionally; and
a load fit for application in this circuit, the load being a secondary battery (B100), a capacitor or a super-capacitance capacitor (C100) capable of storing voltage or one in form of a D.C motor (M100) charged with armatured counter EMF.

3. A circuit according to claim 2, wherein control by the loading voltage testing circuit (VD100) upon the power control element (P100) is such that, once the voltage on the load side rises to a level sufficient to trigger control of the power control element (P100), shunt current will start passing the shunt resistor (R101), so that the differential of voltage between the power supply side and the load side is reduced, and that resulting in a reduction of the power that is being delivered to the load, the circuit further comprising:
(1) at least one Zener diode (ZD101); or alternatively;
(2) a forward bias voltage (VF) to be created by at least one diode (CR101); or
(3) a series combination of a Zener diode and a diode; or
(4) a serially-incorporated, current-limiting resistor (R102) in addition to what is defined under (1), (2) or (3); and
(5) the arrangement having a variable resistor (VR100) in parallel across the load, plus circuit elements defined in (1) through (4) added to the output of variable potential terminal that forms part of the variable resistor.

4. A circuit according to claim 2, wherein the voltage testing circuit serves to drive the power control element straight, or alternatively by the intervention of a relay, such as a photocoupler, or else.

5. A circuit according to claim 1, wherein the D.C power supply is derived by transformation, followed by transformation, of the transformer, the aforementioned resistor (R100) may be incorporated serially as required on the primary input side, or on the secondary input side of the transformer, or alternatively may have its voltage downgraded by transformer impedance or by electromagnetic leakage, in which case the resistor (R100) is saved altogether.
